(19) Europäisches Patentamt
European Patent Office
Office européen des brevets

(11) **EP 3 288 255 B1**

(12) **EUROPEAN PATENT SPECIFICATION**

(45) Date of publication and mention
of the grant of the patent:
**20.03.2019 Bulletin 2019/12**

(51) Int Cl.:
**H04N 5/33** (2006.01)

(21) Application number: **17186182.6**

(22) Date of filing: **14.08.2017**

(54) **IMAGE PROCESSING SYSTEM**

**BILDVERARBEITUNGSSYSTEM**

**SYSTÈME DE TRAITEMENT DES IMAGES**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2016 JP 2016163080**

(43) Date of publication of application:
**28.02.2018 Bulletin 2018/09**

(73) Proprietor: **TOYOTA JIDOSHA KABUSHIKI KAISHA**
**Toyota-shi, Aichi-ken, 471-8571 (JP)**

(72) Inventor: **NINOMIYA, Yoshiki**
**Aichi-ken, 464-8601 (JP)**

(74) Representative: **J A Kemp**
**14 South Square**
**Gray's Inn**
**London WC1R 5JJ (GB)**

(56) References cited:
**US-A1- 2003 184 827      US-A1- 2005 040 333**
**US-A1- 2009 268 963      US-A1- 2014 240 492**
**US-B2- 9 398 235**

**Description**

BACKGROUND OF THE INVENTION

1. Field of the Invention

The invention relates to an image processing system.

2. Description of Related Art

An image input device is known which performs pattern matching by using original infrared image data, and luminance information of an object registered in a memory, determines whether the object whose luminance information is stored in advance is present in the infrared image data, extracting infrared image data corresponding to the object, from the infrared image data, when the object is present in it, and performs combining operation so as to substitute the infrared image data corresponding to the object for corresponding image data of the object in visible-light image data (see, for example, Internal Publication No. 2012-067028 (WO 2012-067028 A1)).

US 2005/040333 discloses a night vision method and system for a road scene comprising at least one projection device emitting an infrared light towards the road scene and a first sensor for capturing a first image of the road scene, this sensor being a colour sensor.

US 2003184827 discloses a method for the real-time processing of a signal representing an image generated by at least one photosensitive device so as to supply, from a scene to be observed having a high dynamic range between the signals corresponding to the darkest areas and to the brightest areas, an image containing no blooming areas.

US 2009/268963 discloses a method and apparatus of pre-processing in wide dynamic range image processing.

SUMMARY OF THE INVENTION

In the known device, the infrared image data corresponding to the object is extracted through pattern matching between the original infrared image data, and the luminance information of the object registered in the memory. Therefore, when the pattern patching is not successful, the infrared image data corresponding to the object cannot be extracted. Also, when the infrared image data cannot be extracted, the visible-light image data is highly likely to include pixels that are fully whitened (an image is displayed totally in white) or fully blackened (displayed totally in black with no luminance); therefore, a clear image cannot be produced.

Thus, in the known device, an image may not be produced through combining operation to substitute infrared image data for corresponding image data of the object in the visible-light image data, and a clear image may not be obtained.

The invention provides an image processing system that can provide a clear image that is free from fully whitened spots or fully blackened spots.

An image processing system is provided in accordance with claim 1.

With the image processing system according to the above aspect, the pixel value of each pixel of the composite image into which the visible-light image and the near-infrared image are combined is obtained, based on the third pixel value obtained by applying a weight to the first pixel value that is within the first range from the first lower-limit threshold value to the first upper-limit threshold value, and the fourth pixel value obtained by applying a weight to the second pixel value that is within the second range from the second lower-limit threshold value to the second upper-limit threshold value. Therefore, fully whitened spots and fully blackened spots are less likely or unlikely to be generated.

Accordingly, the image processing device that can provide a clear image can be provided.

In the image processing system according to the above aspect, the near-infrared irradiator may be configured to irradiate the object with near-infrared rays that are modulated by a predetermined modulation method, and the second image pickup device may be configured to demodulate the near-infrared rays reflected by the object, and capture the near-infrared image from the demodulated near-infrared rays.

With the image processing system as described above, the second image pickup device can capture the near-infrared image obtained solely from the reflected light of the near-infrared rays modulated by the near-infrared irradiator. Thus, an influence due to light other than the near-infrared rays modulated by the near-infrared irradiator can be excluded or removed, and a clear image can be obtained.

With the image processing system as described above, each pixel is provided with a color represented by the second color signal obtained by applying the third weight to the first color signal that represents a color of each pixel of the visible-light image. Thus, an image including colors can be displayed, according to the image signal generated from the image output unit.

In the image processing system according to the above aspect, the signal processor may be configured to:

divide the visible-light image captured by the first image pickup device, into sections corresponding to a predetermined number of spatial frequency bands; divide the near-infrared image captured by the second image pickup device, into sections corresponding to the predetermined number of spatial frequency bands; determine whether the first pixel value is within the first range from the first lower-limit threshold value to the first upper-limit threshold value, with respect to each pixel of each of the sections of the visible-light image corresponding to the respective frequency bands; apply the first weight to the first pixel value when the signal processor determines that the first pixel value is within the first range, with respect to each pixel of each of the sections of the visible-light image corresponding to the respective frequency bands, the first weight being larger than a weight used when the signal processor determines that the first pixel value is not within the first range; determine whether the second pixel value is within the second range from the second lower-limit threshold value to the second upper-limit threshold value, with respect to each pixel of each of the sections of the near-infrared image corresponding to the respective frequency bands; apply the second weight to the second pixel value when the signal processor determines that the second pixel value is within the second range, with respect to each pixel of each of the sections of the near-infrared image corresponding to the respective frequency bands, the second weight being larger than a weight used when the signal processor determines that the second pixel value is not within the second range; calculate a pixel value of the above-indicate each pixel of each of the sections of the visible-light image corresponding to the respective frequency bands, based on the third pixel value obtained by applying the first weight to the first pixel value; calculate a pixel value of the above-indicated each pixel of each of the sections of the near-infrared image corresponding to the respective frequency bands, based on the fourth pixel value obtained by applying the second weight to the second pixel value; and obtain the fifth pixel value by combining the pixel value of the above-indicated each pixel of each of the sections of the visible-light image corresponding to the respective frequency bands, with the pixel value of the above-indicated each pixel of each of the sections of the near-infrared image corresponding to the respective frequency bands.

With the image processing system as described above, the visible-light image and the near-infrared image are divided into sections corresponding to the predetermined number of spatial frequency bands, and subjected to weighting, so that a pixel value of each pixel in each frequency band is obtained, and an image signal obtained by combining image signals of the respective frequency bands is generated. By performing weighting with respect to each frequency band, an image having a higher level of visibility can be produced.

In the image processing system as described above, the signal processor may be configured to apply a third weight to a first color signal representing a color of each pixel of the visible-light image when the signal processor determines that the first pixel value is within the first range, with respect to each of the sections of the visible-light image corresponding to the respective frequency bands, the third weight being larger than a weight used when the first pixel value is not within the first range. The signal processor may also be configured to provide the above-indicated each pixel of each of the sections corresponding to the respective frequency bands, with a color represented by a second signal obtained by applying the third weight to the first color signal.

With the image processing system as described above, each pixel is provided with the color represented by the second color signal obtained by applying the third weight to the first color signal that represents the color of each pixel of the visible-light image. Therefore, with characteristics in each spatial frequency band being reflected by the final composite image, an image including colors can be displayed, according to the image signal generated by the image output unit.

In the image processing system as described above, the signal processor may be configured to obtain the fifth pixel value, by combining the pixel values of the above-indicated each pixel corresponding to the respective frequency bands, after applying a fourth weight set for each of the frequency bands, to a corresponding one of the pixel values.

With the image processing system as described above, the visible-light image and the near-infrared image are divided into sections corresponding to the predetermined number of spatial frequency bands, and subjected to weighting, so that a pixel value of each pixel in each frequency band is obtained, and an image signal obtained by combining the image signals of the respective frequency bands is generated. By performing weighting with respect to each spatial frequency band, it is possible to have characteristics in each spatial frequency band reflected by the final composite image, and produce an image having a high level of visibility, while compressing the dynamic range. Thus, even in the case where the dynamic range of the monitor is small, an image having a high level of visibility can be provided, without causing overflow or underflow.

In the image processing system according to the above aspect, the signal processor may be configured to obtain the fifth pixel value, by dividing a sum of the third pixel value and the fourth pixel value, by a sum of the first weight and the second weight.

Thus, the pixel value of each pixel, which is obtained by dividing the sum of the third pixel value and the fourth pixel value by the sum of the first weight and the second weight, is obtained as a value that varies with the magnitude of the sum of the first weight and the second weight.

It is thus possible to provide the image processing system that can provide a clear image, which is free from fully whitened spots and fully blackened spots.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a view showing the configuration of an image processing system 100 of a first embodiment;
FIG. 2 is a view useful for explaining operation to produce an image that is output to a monitor 50 by an image output unit 137, from a visible-light image and a near-infrared image;
FIG. 3 is a view showing the configuration of an image processing system 200 of a second embodiment; and
FIG. 4 is a flowchart illustrating processing performed by the image processing system 200.

DETAILED DESCRIPTION OF EMBODIMENTS

Some embodiments of the invention in the form of image processing systems will be described.

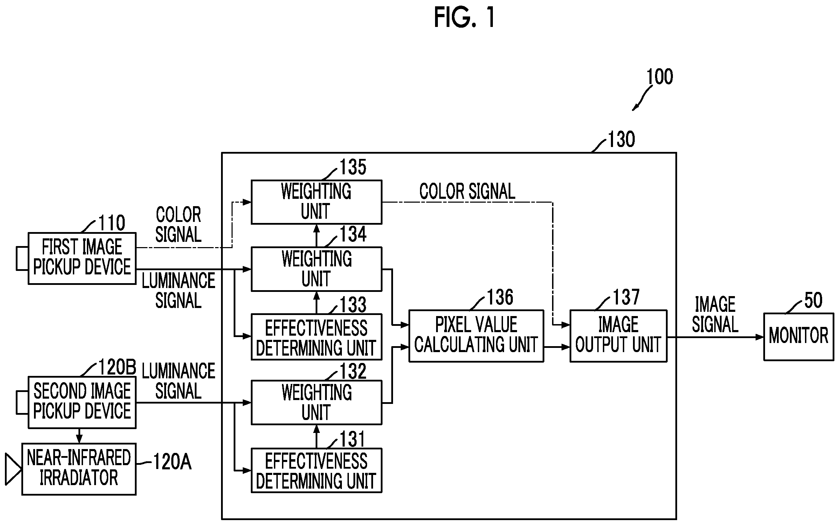

<First Embodiment> FIG. 1 shows the configuration of an image processing system 100 according to a first embodiment of the invention.

The image processing system 100 includes a first image pickup device 110, a near-infrared irradiator 120A, a second image pickup device 120B, and a signal processor 130. A monitor 50 is connected to the image processing system 100.

As one example, the image processing system 100 is applied to or used in a night view system (night vision system) that assists in securing visibility in front of a vehicle at night, as described below.

The first image pickup device 110 captures a visible-light image obtained from reflected light that is reflected by an object located in front of the vehicle and irradiated with visible light. The first image pickup device 110 is, for example, a digital camera, such as a CCD (Charge Coupled Device) camera, which is mounted on the vehicle such that it faces forward of the vehicle, and can capture an image in front of the vehicle. The object may be a road, partition line, sign, vehicle, human being or person, animal, or the like, which exists in front of the vehicle.

The near-infrared irradiator 120A is mounted on the vehicle such that it faces forward, and is operable to irradiate the object in front of the vehicle with near-infrared rays modulated by a certain modulation method. The near-infrared rays are electromagnetic waves having a wavelength of about 0.7 $\mu$m to 2.5 $\mu$m, and have a wavelength close to that of red visible light.

The above-mentioned modulation method may be, for example, a modulation method using pulse wave or sinusoidal wave as a carrier. The near-infrared irradiator 120A modulates near-infrared rays, using pulse wave or sinusoidal wave of several tens of kHz, for example, and irradiates the object with the modulated near-infrared rays.

The second image pickup device 120B receives near-infrared rays (modulated near-infrared rays) radiated from the near-infrared irradiator 120A and reflected by the object, and captures a near-infrared image by synchronously detecting (synchronously demodulating) the received near-infrared rays. When the second image pickup device 120B synchronously detects (synchronously demodulates) the near-infrared rays (modulated near-infrared rays), it uses the same pulse wave or sinusoidal wave as the carrier (pulse wave or sinusoidal wave) used by the near-infrared irradiator 120A for modulation of near-infrared rays. Therefore, the near-infrared rays demodulated by the second image pickup device 120B consist solely of the near-infrared rays radiated from the near-infrared irradiator 120A, and does not include any other rays than the near-infrared rays radiated from the near-infrared irradiator 120A. Since the second image pickup device 120B receives and synchronously detects the near-infrared rays reflected by the object, no halation occurs in the near-infrared image. This is because the luminance of the near-infrared rays is weaker or smaller than that of visible light.

The second image pickup device 120B synchronously detects the received near-infrared rays, using a carrier that is synchronous in phase with the carrier used by the near-infrared irradiator 120A for modulation. By use of the near-infrared irradiator 120A and the second image pickup device 120B as described above, the reflectance of the object that reflects the modulated near-infrared rays can be obtained, and the luminance of the object that reflects the modulated near-infrared rays can be obtained, based on the reflectance. The near-infrared image generated by the second image pickup device 120B represents the luminance of each pixel.

The signal processor 130 has an effectiveness determining unit 131, weighting unit 132, effectiveness determining unit 133, weighting unit 134, weighting unit 135, pixel value calculating unit 136, and an image output unit 137.

The effectiveness determining unit 131 determines the effectiveness of the near-infrared image for each pixel, based on a luminance signal Yi of the near-infrared image captured by the second image pickup device 120B.

Here, the effectiveness indicates whether information as an image is included in each pixel of the near-infrared image. For example, a pixel having an extremely high luminance, like a fully whitened spot or highlight, or a pixel having an extremely low luminance, like a fully blackened spot, is regarded as a pixel that does not have effectiveness. A pixel having a luminance within a given range between an extremely high luminance and an extremely low luminance is regarded as a pixel having effectiveness.

The effectiveness determining unit 131 determines that pixels having a higher luminance than a predetermined upper-limit threshold value Imax, and pixels having a lower luminance than a predetermined lower-limit threshold value Imin are pixels having no effectiveness. Also, the effectiveness determining unit 131 determines that pixels having a luminance that is equal to or lower than the predetermined upper-limit threshold value Imax, and pixels having a luminance that is equal to or higher than the predetermined lower-limit threshold value Imin are pixels having effectiveness. The near-infrared image does not include color signals, but includes luminance signals. The luminance represented by the luminance signal Yi is equivalent to a pixel value.

The weighting unit 132 applies a weight Wi to the luminance signal Yi of each pixel of the near-infrared image captured by the second image pickup device 120B, according to the result of determination of the effectiveness determining unit 131. The weighting unit 132 outputs the luminance signal WiIi obtained by multiplying the luminance signal Yi by the weight Wi, with respect to each pixel of the near-infrared image.

In the first embodiment, the weight Wi applied to the luminance signal Yi of each pixel by the weighting unit 132 is set to 1 when the effectiveness determining unit 131 determines that the pixel has effectiveness, and the weight Wi applied to the luminance signal Yi of each pixel by the weighting unit 132 is set to 0 when the effectiveness determining unit 131 determines that the pixel does not have effectiveness. The weight Wi used for weighting by the weighting unit 132 is one example of the second weight.

With regard to a visible-light image captured by the first image pickup device 110, an effectiveness determining unit 133 determines the effectiveness of the visible-light image for each pixel, based on a luminance signal Yv of each pixel of the visible-light image.

Here, the effectiveness indicates whether information as an image is included in each pixel of the visible-light image. The meaning of the effectiveness is the same as the effectiveness determined by the effectiveness determining unit 131. Namely, a pixel, such as a fully whitened sport or highlight, or a fully blackened spot, is determined as a pixel having no effectiveness, and a pixel having a luminance within a given range between an extremely high luminance and an extremely low luminance is determined as a pixel having effectiveness. Also, the luminance represented by the luminance signal Yv is equivalent to a pixel value of the visible-light image captured by the first image pickup device 110.

The effectiveness determining unit 133 determines that pixels having a higher luminance than a predetermined upper-limit threshold value Imax, and pixels having a lower luminance than a predetermined lower-limit threshold value Imin, are pixels having no effectiveness. Also, the effectiveness determining unit 133 determines that pixels having a luminance that is equal to or lower than the predetermined upper-limit threshold value Imax, and pixels having a luminance that is equal to or higher than the predetermined lower-limit threshold value Imin, are pixels having effectiveness.

In this embodiment, the upper-limit threshold value Imax and lower-limit threshold value Imin used by the effectiveness determining unit 133 are equal to the upper-limit threshold value Imax and lower-limit threshold value Imin used by the effectiveness determining unit 131, respectively. However, the upper-limit threshold value Imax and lower-limit threshold value Imin used by the effectiveness determining unit 133 may be different from the upper-limit threshold value Imax and lower-limit threshold value Imin used by the effectiveness determining unit 131.

The weighting unit 134 applies a weight Wv to the luminance signal Yv of each pixel of the visible-light image captured by the first image pickup device 110, according to the result of determination of the effectiveness determining unit 133. The weighting unit 134 performs weighting in the same manner as the weighting unit 132. The weighting unit 134 outputs a luminance signal WvIv obtained by multiplying the luminance signal Yv by the weight Wv, with respect to each pixel of the visible-light image.

The weight Wv applied to the luminance signal Yv of each pixel of the visible-light image by the weighting unit 134 is set to 1 when the effectiveness determining unit 133 determines that the pixel has effectiveness, and the weight Wv applied to the luminance signal Yv of each pixel of the visible-light image by the weighting unit 134 is set to 0 when the effectiveness determining unit 133 determines that the pixel has no effectiveness. The weight Wv used for weighting by the weighting unit 134 is one example of the first weight.

The weighting unit 135 performs weighting on a color signal Cs of each pixel of the visible-light image captured by the first image pickup device 110, using the weight Wv received from the weighting unit 134. The weight Wv used by the weighting unit 135 for weighting is one example of the third weight. The weighting unit 135 outputs a color signal WvCs that has undergone weighting, to the image output unit 137.

The pixel value calculating unit 136 obtains a luminance signal Y that represents a pixel value of each pixel of a composite image of the visible-light image and the near-infrared image, by dividing the sum of the luminance signal WvIv obtained by the weighting unit 134 with respect to each pixel of the visible-light image, and the luminance signal WiIi obtained by the weighting unit 132 with respect to each pixel of the near-infrared image, by the sum of the weight Wv used by the weighting unit 134 and the weight Wi used by the weighting unit 132.

Namely, the luminance signal Y obtained by the pixel value calculating unit 136 for each pixel is expressed by the following equation (1):

EP 3 288 255 B1

$$Y = (Yv \times Wv + Yi \times Wi)/(Wv + Wi) \qquad (1)$$

The image output unit 137 outputs an image signal including the luminance signals Y obtained by the pixel value calculating unit 136 with respect to all pixels, and the color signals WvCs subjected to weighting by the weighting unit 135 to the monitor 50. In other words, the image output unit 137 outputs the image signal representing an image in which the color signals WvCs are added to the luminance signals Y, to the monitor 50.

The monitor 50 is a liquid crystal display panel or organic EL (electroluminescence) panel disposed on a dashboard or meter panel of the vehicle, or a head-up display (HUD), or the like.

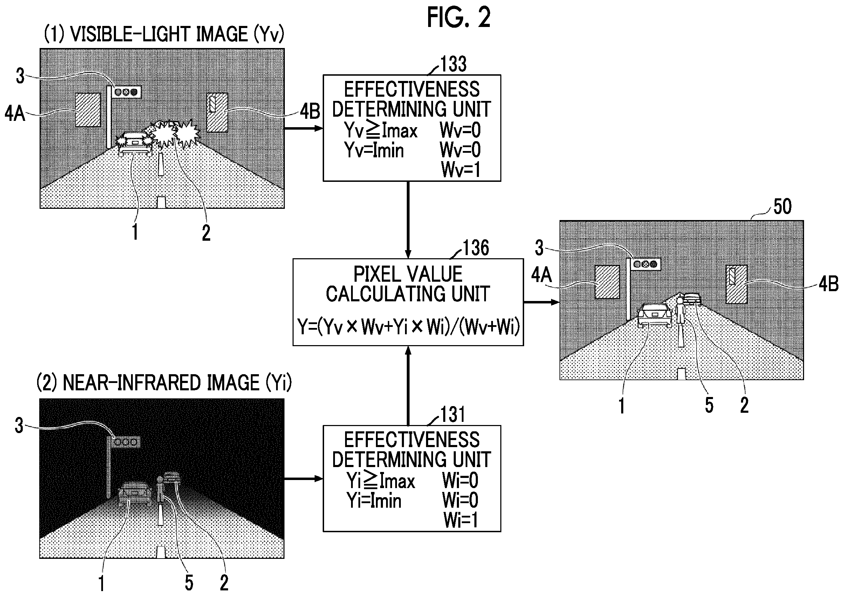

FIG. 2 is a view useful for explaining a process of producing an image that is output to the monitor 50 by the image output unit 137, from the visible-light image and the near-infrared image.

The visible-light image shown in FIG. 2, which has the luminance signals Yv, shows a road having one lane each way, or double lane. On the road, brake lamps of a vehicle 1 that travels toward the back of the image along the left lane are lit, and the luminance of pixels representing the brake lamps and their surroundings exceeds the upper-limit threshold value Imax used by the effectiveness determining unit 133. Namely, halation takes place. Also, headlights of a vehicle 2 that travels toward the front of the image along the right lane are lit, and the luminance of pixels representing the headlights and their surroundings exceeds the upper-limit threshold value Imax used by the effectiveness determining unit 133. In these regions, too, halation takes place.

The visible-light image also includes images of a traffic light 3, and signs 4A, 4B.

The near-infrared image shown in FIG. 2, which has the luminance signals Yi, includes an image of a person 5, in addition to the vehicles 1, 2, and the traffic light 3, but does not include images of the signs 4A, 4B. The images of the signs 4A, 4B are not included in the near-infrared image, since the luminance sufficient to allow these images to be displayed as near-infrared images could not be obtained with the near-infrared rays. In the visible-light image, the person 5 is embedded in light radiated from the headlights of the vehicle 2, and thus cannot be recognized.

With regard to the visible-light image as described above, the effectiveness determining unit 133 determines the effectiveness of the visible-light image for each pixel, using the upper-limit threshold value Imax and the lower-limit threshold value Imin, and the weighting unit 134 applies the weight Wv to each pixel, according to the result of determination of the effectiveness determining unit 133.

Also, the weighting unit 135 weights the color signal Cs of each pixel of the visible-light image, using the weight Wv received from the weighting unit 134.

With regard to the near-infrared image, the effectiveness determining unit 131 determines the effectiveness of the near-infrared image for each pixel, using the upper-limit threshold value Imax and the lower-limit threshold value Imin, and the weighting unit 132 applies the weight Wi to each pixel, according to the result of determination of the effectiveness determining unit 131.

Then, the pixel value calculating unit 136 obtains the luminance signal Y for each pixel according to the above equation (1), and an image signal including the luminance signals Y and color signals WvCs of all pixels is transmitted from the image output unit 137 to the monitor 50, so as to be displayed as shown on the right-hand side in FIG. 2.

In the image displayed on the monitor 50, images included in the near-infrared image are displayed, on the pixels corresponding to the brake lamps of the vehicle 1, the headlights of the vehicle 2, and their surroundings. This is because, if the luminance of each pixel exceeds the upper-limit threshold value Imax used by the effectiveness determining unit 133, the weight Wv is set to 0, and the weight Wi is set to 1; therefore, the luminance of the visible-light image is not included in the pixels of the brake lamps of the vehicle 1, the headlights of the vehicle 2, and their surroundings, but the luminance of the near-infrared image is displayed. Also, the weight Wv is set to 0, with respect to the pixels of the brake lamps of the vehicle 1, the headlights of the vehicle 2, and their surroundings; therefore, the signal level of the color signal Cs of each pixel in these regions becomes equal to zero, and these regions are not colored.

Consequently, the pixels of the brake lamps of the vehicle 1, the headlight of the vehicle 2, and their surroundings, are displayed in white only with the luminance.

With regard to pixels other than those of the brake lamps of the vehicle 1, headlights of the vehicle 2, and their surroundings, both the weight Wv and the weight Wi are set to 1; therefore, an image including the luminance of the visible-light image by 50% and the luminance of the near-infrared image by 50% is displayed. Also, since the weight Wv is set to 1, the signal level (WvCs) of the weighted color signal Cs becomes Cs, and the color signals included in the visible-light image are reflected. Namely, the resulting image is colored in the same manner as the visible-light image.

Consequently, with regard to the pixels other than those of the brake lamps of the vehicle 1, headlights of the vehicle 2, and their surroundings, the image that includes the luminance of the visible-light image by 50% and the luminance of the near-infrared image by 50%, and is colored in the same manner as the visible-light image, is displayed. As shown in FIG. 2, all of the traffic light 3, signs 4A, 4B, and the person 5 are displayed.

As described above, by using the visible-light image in which fully whitened spots or fully blackened spots appear in the pixels of the brake lamps of the vehicle 1, headlights of the vehicle 2, and their surroundings, and the near-infrared image for the same objects, the effectiveness of the near-infrared image and the visible-light image is determined by the effectiveness determining units 131 and 133, and weighting of the near-infrared image and visible-light image are performed by the weighting units 132 and 134, while weighting of the color signals Cs is performed by the weighting unit 135, so that a clear image that is free from the fully whitened spots and fully blackened spots can be obtained, as shown on the right-hand side in FIG. 2.

Since detection of vehicles or persons is not performed as in the related art, a clear image can be obtained with certainty, based on the visible-light image and the near-infrared image.

Accordingly, according to the first embodiment, the image processing system 100 with high reliability can be provided.

Since the near-infrared rays received by the second image pickup device 120B does not include any rays other than the near-infrared rays radiated from the near-infrared irradiator 120A and reflected by the object. Therefore, the reflectance of the object that reflects the modulated near-infrared rays can be obtained, and the luminance of the object that reflects the modulated near-infrared rays can be obtained, based on the reflectance.

Accordingly, the luminance of the object can be accurately captured, by excluding an influence of rays other than the near-infrared rays radiated from the near-infrared irradiator 120A, and the image processing system 100 with high reliability can be provided. In particular, among infrared rays, the near-infrared rays (having a wavelength of about 0.7 $\mu$m to 2.5 $\mu$m) are less likely to be influenced by backlight, unlike far-infrared rays (having a wavelength of about 4 $\mu$m to 1000 $\mu$m) that are likely to be influenced by backlight. It is thus possible to accurately obtain the luminance of the object, and surely obtain an image with high reliability.

While the image processing system 100 is applied to or used in the night view system (or night vision system) in the embodiment as described above, the image processing system 100 may also be useful during daytime (hours of sunshine from sunrise to sunset), since it uses the near-infrared image obtained by synchronous detection and the visible-light image, and can provide a clear image including a reduced number of fully whitened spots and fully blackened spots, even in a situation where backlight, or the like, is bright during daytime.

In the above description, the near-infrared irradiator 120A modulates near-infrared rays, using pulse wave or sinusoidal wave of about several tens of kHz, and the second image pickup device 120B demodulates the modulated near-infrared rays, using the same pulse wave or sinusoidal wave as the carrier (pulse wave or sinusoidal wave) used by the near-infrared irradiator 120A for modulation. However, the waveform and frequency of the carrier are not limited to those described above, but signals having other waveforms (such as saw-tooth wave) or frequencies may be used.

Also, in the first embodiment, the near-infrared irradiator 120A delivers near-infrared rays modulated by a certain modulation method, and the second image pickup device 120B demodulates the modulated near-infrared rays modulated by the near-infrared irradiator 120A, and obtains a near-infrared image from the demodulated near-infrared rays. However, the near-infrared irradiator 120A may deliver near-infrared rays that are not modulated, and the second image pickup device 120B may receive near-infrared rays (near-infrared rays that are not modulated), and obtain a near-infrared image from the received near-infrared rays.

In the above description, the pixel value calculating unit 136 obtains the luminance signal Y that represents the pixel value of each pixel, by dividing the sum of the luminance signal WvIv and the luminance signal WiIi, by the sum of the weight Wv and the weight Wi. However, the manner of obtaining the luminance signal Y is not limited to this method. For example, the average value of the sum of the luminance signal WvIv and the luminance signal WiIi may be obtained as the luminance signal Y, or the luminance signal Y may be obtained by another method.

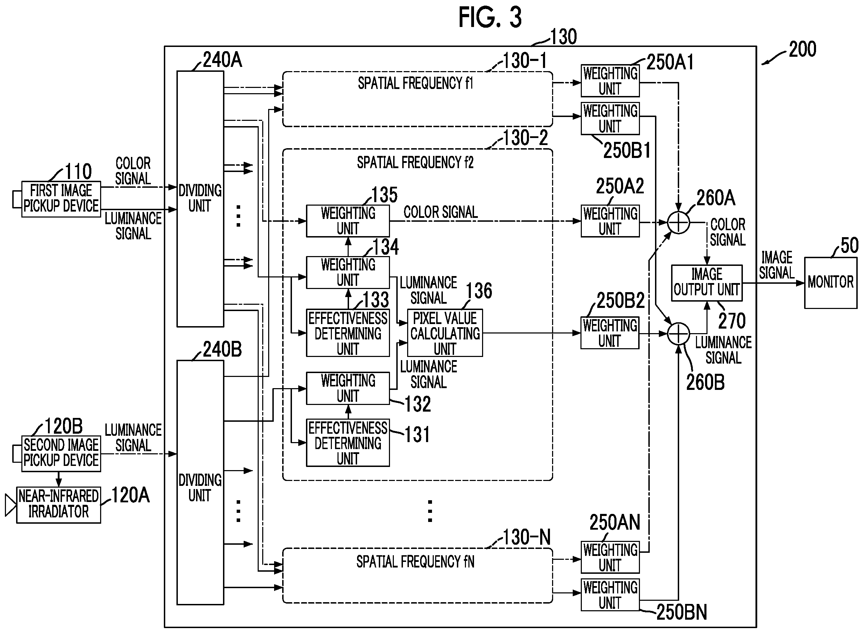

<Second Embodiment> FIG. 3 shows the configuration of an image processing system 200 of a second embodiment.

The image processing system 200 is different from the image processing system 100 of the first embodiment, in that the image processing system 200 divides the visible-light image and the near-infrared image of the image processing system 100 of the first embodiment, into those corresponding to an N-piece (N is an integer equal to or larger than 2) of spatial frequency bands, and performs the same processing as that of the first embodiment, with respect to each of the frequency bands. Also, the image processing system 200 is further different from the image processing system 100 of the first embodiment in that the system 200 performs weighting on an N-piece of images obtained by performing the same processing as that of the first embodiment with respect to each frequency band, and combines these images.

In the following, the differences from the first embodiment will be mainly described. The same reference numerals are assigned to constituent elements that are identical with or similar to those of the image processing system 100 of the first embodiment, and description of these elements will not be provided.

The image processing system 200 includes the first image pickup device 110, near-infrared irradiator 120A, second image pickup device 120B, and the signal processor 130. The signal processor 130 includes dividers 240A, 240B, signal processors 130-1 to 130-N for the respective bands, weighting units 250A1 - 250AN, 250B1 - 250BN, combining units 260A, 260B, and an image output unit 270. The monitor 50 is connected to the image processing system 200.

The divider 240A divides the luminance signal Yv and color signal Cs of each pixel of the visible-light image captured by the image pickup device 110, into those corresponding to the N-piece of spatial frequency bands, and outputs the N-piece of luminance signals and color signals corresponding to the respective bands, to the signal processors 130-1 to 130-N, respectively. The divider 240A may divide the luminance signal Yv and the color signal Cs into those corresponding to the N-piece of spatial frequency bands, by performing FFT (Fast Fourier Transform), or wavelet transform, for example.

The luminance signals of the N-piece of visible-light images corresponding to the N-piece of spatial frequency bands are transmitted to the effectiveness determining units 133 and weighting units 134 of the signal processors 130-1 to 130-N for the respective bands, and the N-piece of color signals corresponding to the N-piece of spatial frequency bands are transmitted to the weighting units 135 of the signal processors 130-1 to 130-N for the respective bands.

The divider 240B divides the luminance signal Yi of each pixel of the near-infrared image captured by the image pickup device 120B, into those corresponding to the N-piece of spatial frequency bands, and outputs the N-piece of luminance signals corresponding to the respective bands, to the signal processors 130-1 to 130-N for the respective bands. The N-piece of luminance signals of the near-infrared image corresponding to the N-piece of spatial frequency bands are transmitted to the effectiveness determining units 131 and weighting units 132 of the signal processors 130-1 to 130-N for the respective bands.

The divider 240B may divide the luminance signal Yi into those corresponding to the N-piece of spatial frequency bands, by performing FFT, or wavelet transform, for example.

The signal processors 130-1 to 130-N for the respective bands have the same configuration, and each of the signal processors 130-1 to 130-N has the effectiveness determining unit 131, weighting unit 132, effectiveness determining unit 133, weighting unit 134, weighting unit 135, and the pixel value calculating unit 136. Each of the signal processors 130-1 to 130-N for the respective bands is different from the signal processor 130 of the first embodiment in that the signal processor of the second embodiment does not include the image output unit 137 (see FIG. 1). The image output unit 270 performs substantially the same processing as the image output unit 137.

FIG. 3 shows the effectiveness determining unit 131, weighting unit 132, effectiveness determining unit 133, weighting unit 134, weighting unit 135, and the pixel value calculating unit 136, which are included in the signal processor 130-2, rather than showing the internal configuration of all of the signal processors 130-1 to 130-N for the respective bands.

Each of the signal processors 130-1 to 130-N performs substantially the same signal processing as the signal processor 130 of the first embodiment, based on the N-piece of luminance signals of the visible-light image corresponding to the N-piece of spatial frequency bands, the N-piece of color signals corresponding to the N-piece of spatial frequency bands, and the N-piece of luminance signals of the near-infrared image corresponding to the N-piece of spatial frequency bands.

Each of the weighting units 250A1 to 250AN performs weighting on the color signal of each band which has been weighted by the weighting unit 135 of the corresponding one of the signal processors 130-1 to 130-N for the respective bands, and outputs the resulting signal to the combining unit 260A. The weights Wf1 to WfN applied to the color signals in the weighting units 250A1 to 250AN may be set as desired. For example, the weight of a certain band of a color that is easy to see with the human eyes in a night view image may be set to be heavy (or a large value), and the weight of a certain band of a color that is difficult to see with the human eyes in a night view image may be set to be light (or a small value). Also, the weights Wf1 to WfN may be set such that the weight of a frequency band in which the color signal has a larger amplitude is set to a larger value. Also, the weights Wf1 to WfN applied in the weighting units 250A1 to 250AN may be determined by experiment, or the like, such that the night view image on which weighting has been performed can be easily seen with the human eyes.

Each of the weighting units 250B1 to 250BN performs weighting on the luminance signal of each band which has been weighted by the weighting unit 134 of the corresponding one of the signal processors 130-1 to 130-N, and outputs the resulting luminance signal to the combining unit 260B. The weights Wf1 to WfN applied to the luminance signals in the weighting units 250B1 to 250BN may be set as desired. For example, the weight of a certain band of a color that is easy to see with the human eyes in a night view image may be set to be heavy (or a large value), and the weight of a certain band of a color that is difficult to see with the human eyes in a night view image may be set to be light (or a small value).

In this embodiment, the weights Wf1 to WfN applied in the weighting units 250B1 to 250BN are set to values that are respectively equal to those of the weights Wf1 to WfN applied in the weighting units 250A1 to 250AN. However, the weights Wf1 - WfN applied in the weighting units 250B1 to 250BN may be set to different values from the weights Wf1 to WfN applied in the weighting units 250A1 to 250AN.

The combining unit 260A combines the color signals of the respective bands weighted by the weighting units 250A1 to 250AN, and outputs the composite signal to the image output unit 270.

The combining unit 260B combines the luminance signals of the respective bands weighted by the weighting units 250B1 to 250BN, and outputs the composite signal to the image output unit 270.

The image output unit 270 outputs an image signal including the color signals received from the combining unit 260A, and the luminance signals received from the combining unit 260B to the monitor 50. The image output unit 270 performs substantially the same processing as the image output unit 137.

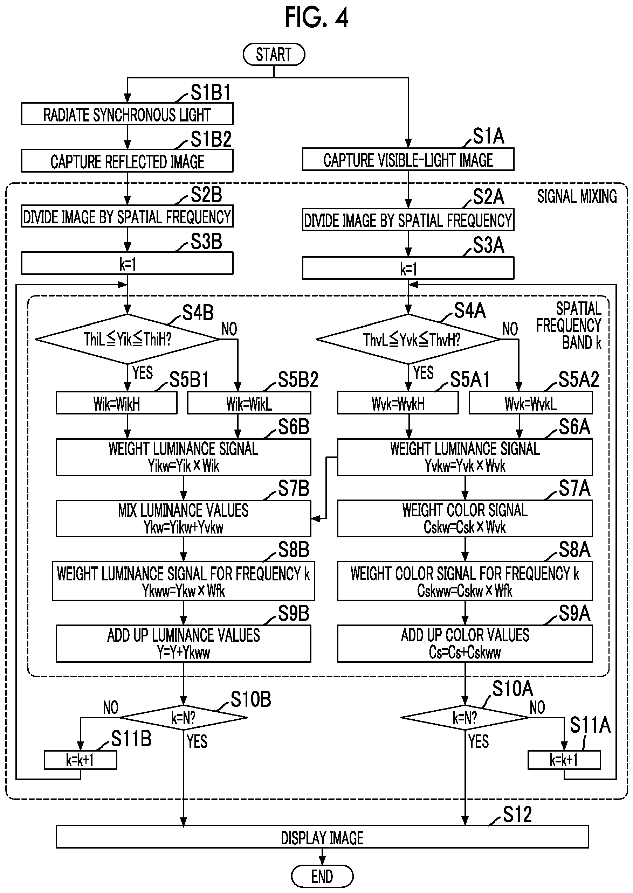

FIG. 4 is a flowchart illustrating processing executed by the image processing system 200.

Once the processing starts, the first image pickup device 110 captures a visible-light image (step S1A), while the near-infrared irradiator 120A delivers near-infrared rays (step S1B1), and the second image pickup device 120B captures a near-infrared image (step S1B2).

The dividing unit 240A divides the luminance signal Yv and color signal Cs of each pixel of the visible-light image captured by the first image pickup device 110, into luminance signals Yvk and color signals Csk of the N-piece of spatial frequency bands (step S2A).

The dividing unit 240B divides the luminance signal Yi of each pixel of the near-infrared image captured by the second image pickup device 120B, into luminance signals Yik of the N-piece of spatial frequency bands (step S2B).

The image processing system 200 sets k to 1 (k=1) (steps S3A, S3B). The value of k represents the number (division number) of bands of the spatial frequency into which the luminance or color signal is divided by the dividing units 240A and 240B, and assumes a value of 1 to N (N is an integer equal to or larger than 2).

The effectiveness determining unit 133 determines the effectiveness of the luminance signal Yvk of each pixel (step S4A). The effectiveness is determined by determining whether the luminance signal Yvk is equal to or higher than a lower-limit threshold value ThvL, and is equal to or lower than an upper-limit threshold value ThvH (whether ThvL$\leq$Yvk$\leq$ThvH is satisfied).

The effectiveness determining unit 131 determines the effectiveness of the luminance signal Yik of each pixel (step S4B). The effectiveness is determined by determining whether the luminance signal Yik is equal to or higher than a lower-limit threshold value ThiL, and is equal to or lower than an upper-limit threshold value THiH (whether ThiL$\leq$Yik$\leq$ThiH is satisfied).

Initially, steps S5A1 through S10A will be described.

If the effectiveness determining unit 133 determines in step S4A that the luminance signal Yvk of a given pixel has effectiveness (ThvL$\leq$Yvk$\leq$ThvH is satisfied), the weighting unit 134 sets the weight Wvk to a weight WvkH (step S5A1). Namely, Wvk is equal to WvkH. The weight WvkH is a heavier or larger value than a weight WvkL which will be described later, and is set to 1, for example.

If the effectiveness determining unit 133 determines in step S4A that the luminance signal Yvk of a given pixel does not have effectiveness (Thvl$\leq$Yvk$\leq$ThvH is not satisfied), the weighting unit 134 sets the weight Wvk to the weight WvkL. The weight WvkL is a lighter or smaller value than the weight WvkH, and is set to 0, for example.

The weighting unit 134 weights the luminance signal Yvk with the weight Wvk (WvkH or WvkL) set in step S5A1 or S5A2, to thus obtain a luminance signal Yvkw (step S6A). Namely, Yvkw=Yvk$\times$Wvk.

The weighting unit 135 weights the color signal Csk, using the weight Wvk used by the weighting unit 134 for weighting, to thus obtain a color signal Cskw (step S7A). Namely, Cskw=Csk$\times$Wvk.

The weighting unit 250Ak weights the color signal Cskw with a weight Wfk, to thus obtain a color signal Cskww (step S8A). Namely, Cskww=Cskw$\times$Wfk.

The combining unit 260A combines the color signals, to thus obtain a color signal Cs (step S9A). The operation of step S9A is to obtain Cs, by adding up the color signals Cskww obtained in step S8A while k ranges from 1 to N, and the color signal Cs is expressed as follows: Cs=Cs+Cskww.

The image processing system 200 determines whether k=N (step S10A). If k=N is not satisfied (S10A: NO), the image processing system 200 proceeds to step S11A.

The image processing system 200 increments k (step S11A). If the operation of step S11A ends, the flow returns to step S4A. In this manner, the flow is repeatedly executed until k=N is satisfied in step S10A. If k=N is satisfied in step S10, the flow proceeds to step S12.

If the effectiveness determining unit 131 determines in step S4B that the luminance signal Yik of a given pixel has effectiveness (ThiL$\leq$Yik$\leq$ThiH is satisfied), the weighting unit 132 sets the weight Wik to a weight WikH (step S5B1). Namely, Wik is equal to WikH. The weight WikH is a heavier or larger value than a weight WikL which will be described later, and is set to 1, for example.

If the effectiveness determining unit 131 determines in step S4B that the luminance signal Yik of a given pixel does not have effectiveness (ThiL$\leq$Yik$\leq$ThiH is not satisfied), the weighting unit 132 sets the weight Wik to the weight WikL in step S5B2. The weight WikL is a lighter or smaller value than the weight WikH, and is set to 0, for example.

The weighting unit 132 weights the luminance signal Yik with the weight Wik (WikH or WikL) set in step S5B1 or S5B2, to thus obtain a luminance signal Yikw (step S6B). Namely, Yikw=Yik$\times$Wik.

The pixel value calculating unit 136 obtains the luminance signal Ykw by adding the luminance signal Yvkw obtained in step S6A, to the luminance signal Yikw obtained in step S6B, to thus obtain a luminance signal Ykw (step S7B). Namely,

$$Ykw=Yikw+Yvkw.$$

The weighting unit 250Bk weights the luminance signal Ykw with a weight Wfk, to thus obtain a luminance signal Ykww (step S8B). Namely, the luminance signal Ykww=Ykw×Wfk.

The combining unit 260B combines the luminance signals, to thus obtain a luminance signal Y (step S9B). The operation of step S9B is to obtain the luminance signal Y, by adding up the luminance signals Ykww obtained in step S8B while k ranges from 1 to N, thereby to obtain the luminance signal Y. This operation is expressed as

$$Y=Y+Ykww.$$

The image processing system 200 determines whether k=N (step S10B). If k=N is not satisfied (S10B: NO), the image processing system 200 proceeds to step S11B.

The image processing system 200 increments k (step S11B). If the operation of step S11B ends, the flow returns to step S4B. In this manner, the flow is repeatedly executed until k=N is satisfied in step S10B. If k=N is satisfied in step S10B, the flow proceeds to step S12.

The image output unit 270 outputs an image signal including the luminance signals Y and the color signals Cs to the monitor 50 (step S12).

With the above processing thus performed, the luminance signal Yvk and color signal Csk of each pixel of the visible-light image divided by the dividing unit 240A into those corresponding to the N-piece of spatial frequency bands, and the luminance signal Yik of each pixel of the near-infrared image divided by the dividing unit 240B into those corresponding to the N-piece of spatial frequency bands are processed in the signal processing units 130-1 to 130-N. Further, weighting is performed in the weighting units 250A1 to 250AN with respect to each frequency band, and then, the image signal including the color signals Cs produced by the combining unit 260A, and the luminance signals Y produced by the combining unit 260B, can be generated to the monitor 50.

Thus, according to the second embodiment, the image processing system 200 having high reliability can be provided, as in the first embodiment.

In the second embodiment, weighting is individually performed on the luminance signals Ykw (=Yikw+Yvkw) obtained in the N-piece of spatial frequency bands; therefore, it is possible to produce an image having a high level of visibility, while compressing the dynamic range. Thus, even in the case where the dynamic range of the monitor 50 is small, an image having a high level of visibility can be provided, without causing overflow or underflow.

In the second embodiment as described above, the image processing system 200 includes the weighting units 250A1 - 250AN in which weighting is performed on the color signal of each pixel in each frequency band, and the weighting units 250B1 - 250BN in which weighting is performed on the luminance signal of each pixel in each frequency band.

However, the system may not include the weighting units 250A1 - 250AN, and the weighting units 250B1 - 250BN. Rather, the N-piece of color signals corresponding the N-piece of spatial frequency bands, which are generated from the signal processors 130-1 to 130-N for the respective bands, may be combined in the combining unit 260A, and the N-piece of luminance signals of the visible-light image corresponding to the N-piece of spatial frequency bands, and the N-piece of luminance signals of the near-infrared image corresponding to the N-piece of spatial frequency bands, which are generated from the signal processors 130-1 to 130-N for the respective bands, may be combined in the combining unit 260B. Then, the resulting color signal and luminance signal for each pixel may be generated from the image output unit 270 to the monitor 50.

While the image processing systems of the exemplary embodiments of the invention have been described, this invention is not limited to the specifically disclosed embodiments, but may be modified or changed in various forms, without departing from the scope of the invention defined in the appended claims.

**Claims**

1. An image processing system comprising:

   a first image pickup device (110) configured to capture a visible-light image obtained from first reflected light that is reflected by an object irradiated with visible light;
   a near-infrared irradiator (120A) configured to irradiate the object with near-infrared rays;
   a second image pickup device (120B) configured to capture a near-infrared image obtained from the near-infrared rays reflected by the object; and
a signal processor (130; 200) configured to:

determine whether a first pixel value as a pixel value of each pixel of the visible-light image is within a first range from a first lower-limit threshold value to a first upper-limit threshold value, wherein a luminance of a pixel is represented by a luminance signal (Yv) which is equivalent to the first pixel value;

apply a first weight (Wv) to the first pixel value when the signal processor (130; 200) determines that the first pixel value is within the first range, the first weight (Wv) being larger than a weight (Wv) used when the signal processor (130; 200) determines that the first pixel value is not within the first range;

determine whether a second pixel value as a pixel value of each pixel of the near-infrared image is within a second range from a second lower-limit threshold value to a second upper-limit threshold value;

apply a second weight (Wi) to the second pixel value when the signal processor (130; 200) determines that the second pixel value is within the second range, the second weight being larger than a weight (Wi) used when the signal processor (130; 200) determines that the second pixel value is not within the second range;

calculate a fifth pixel value as a pixel value of each pixel of a composite image into which the visible-light image and the near-infrared image are combined, based on a third pixel value obtained by applying the first weight (Wv) to the first pixel value, and a fourth pixel value obtained by applying the second weight (Wi) to the second pixel value;

output an image signal representing an image in which each pixel has said fifth pixel value;

apply a third weight (Wv) to a first color signal (Cs) representing a color of each pixel of the visible-light image when the signal processor (130; 200) determines that the first pixel value is within the first range, the third weight being larger than a weight used when the signal processor (130; 200) determines that the first pixel value is not within the first range; and

output an image signal representing an image in which the fifth pixel value is provided with a color represented by a second color signal obtained by applying the third weight (Wv) to the first color signal (Cs).

2. The image processing system according to claim 1, wherein:

the near-infrared irradiator (120A) is configured to irradiate the object with near-infrared rays that are modulated by a predetermined modulation method; and

the second image pickup device (120B) is configured to demodulate the near-infrared rays reflected by the object, and capture the near-infrared image from a demodulated near-infrared rays.

3. The image processing system according to claim 1 or 2, wherein
the signal processor (200) is configured to:

divide the visible-light image captured by the first image pickup device (110), into sections corresponding to a predetermined number of spatial frequency bands;

divide the near-infrared image captured by the second image pickup device (120B), into sections corresponding to the predetermined number of spatial frequency bands;

determine whether the first pixel value is within the first range from the first lower-limit threshold value to the first upper-limit threshold value, with respect to each pixel of each of the sections of the visible-light image corresponding to the respective frequency bands;

apply the first weight (Wv) to the first pixel value when the signal processor (200) determines that the first pixel value is within the first range, with respect to each pixel of each of the sections of the visible-light image corresponding to the respective frequency bands, the first weight (Wv) being larger than a weight (Wv) used when the signal processor (200) determines that the first pixel value is not within the first range;

determine whether the second pixel value is within the second range from the second lower-limit threshold value to the second upper-limit threshold value, with respect to each pixel of each of the sections of the near-infrared image corresponding to the respective frequency bands;

apply the second weight (Wi) to the second pixel value when the signal processor (200) determines that the second pixel value is within the second range, with respect to each pixel of each of the sections of the near-infrared image corresponding to the respective frequency bands, the second weight (Wi) being larger than a weight (Wi) used when the signal processor (200) determines that the second pixel value is not within the second range;

calculate a pixel value of said each pixel of each of the sections of the visible-light image corresponding to the respective frequency bands, based on the third pixel value obtained by applying the first weight (Wv) to the first pixel value;

calculate a pixel value of said each pixel of each of the sections of the near-infrared image corresponding to the respective frequency bands, based on the fourth pixel value obtained by applying the second weight to the second pixel value; and
obtain the fifth pixel value by combining the pixel value of said each pixel of each of the sections of the visible-light image corresponding to the respective frequency bands, with the pixel value of said each pixel of each of the sections of the near-infrared image corresponding to the respective frequency bands.

4. The image processing system according to claim 3, wherein:

the signal processor (200) is configured to apply the third weight (Wv) to the first color signal (Cs) representing a color of each pixel of the visible-light image when the signal processor (200) determines that the first pixel value is within the first range, with respect to each of the sections of the visible-light image corresponding to the respective frequency bands, the third weight (Wv) being larger than a weight (Wv) used when the first pixel value is not within the first range; and
the signal processor (200) is configured to provide said each pixel of each of the sections corresponding to the respective frequency bands, with a color represented by a second signal obtained by applying the third weight (Wv) to the first color signal (Cs).

5. The image processing system according to claim 3 or 4, wherein the signal processor (200) is configured to obtain the fifth pixel value, by combining the pixel values of said each pixel corresponding to the respective frequency bands, after applying a fourth weight (wf1 to wfN) set for each of the frequency bands, to a corresponding one of the pixel values.

6. The image processing system according to any one of claims 1 to 5, wherein the signal processor (130; 200) is configured to obtain the fifth pixel value, by dividing a sum of the third pixel value and the fourth pixel value, by a sum of the first weight (Wv) and the second weight (Wi).

## Patentansprüche

1. Bildverarbeitungssystem, das Folgendes umfasst:

eine erste Bildaufnahmevorrichtung (110), die dazu ausgelegt ist, ein Sichtbarlichtbild von erstem reflektiertem Licht, das von einem Objekt reflektiert wird, das mit sichtbarem Licht bestrahlt wird, zu erfassen;
einen Nahinfrarotbestrahler (120A), der dazu ausgelegt ist, das Objekt mit Nahinfrarotstrahlen zu bestrahlen;
eine zweite Bildaufnahmevorrichtung (120B), die dazu ausgelegt ist, ein Nahinfrarotbild zu erfassen, das von den Nahinfrarotstrahlen erhalten wird, die vom Objekt reflektiert werden; und
einen Signalprozessor (130; 200), der zu Folgendem ausgelegt ist:

Bestimmen, ob ein erster Pixelwert als ein Pixelwert von jedem Pixel des Sichtbarlichtbildes innerhalb eines ersten Bereichs von einem ersten Untergrenzenschwellwert zu einem ersten Obergrenzenschwellwert liegt, wobei eine Luminanz eines Pixels durch ein Luminanzsignal (Yv) repräsentiert wird, das dem ersten Pixelwert äquivalent ist;
Anwenden einer ersten Gewichtung (Wv) auf den ersten Pixelwert, wenn der Signalprozessor (130; 200) bestimmt, dass der erste Pixelwert innerhalb des ersten Bereichs liegt, wobei die erste Gewichtung (Wv) größer ist als eine Gewichtung (Wv), die verwendet wird, wenn der Signalprozessor (130; 200) bestimmt, dass der erste Pixelwert nicht innerhalb des ersten Bereichs liegt;
Bestimmen, ob ein zweiter Pixelwert als ein Pixelwert von jedem Pixel des Nahinfrarotbildes innerhalb eines zweiten Bereich von einem zweiten Untergrenzenschwellwert zu einem zweiten Obergrenzenschwellwert liegt;
Anwenden einer zweiten Gewichtung (Wi) auf den zweiten Pixelwert, wenn der Signalprozessor (130; 200) bestimmt, dass der zweite Pixelwert innerhalb des zweiten Bereichs liegt, wobei die zweite Gewichtung (Wi) größer ist als eine Gewichtung (Wi), die verwendet wird, wenn der Signalprozessor (130; 200) bestimmt, dass der zweite Pixelwert nicht innerhalb des zweiten Bereichs liegt;
auf Basis eines dritten Pixelwerts, der durch Anwenden der ersten Gewichtung (Wv) auf den ersten Pixelwert erhalten wird, und eines vierten Pixelwerts, der durch Anwenden der zweiten Gewichtung (Wi) auf den zweiten Pixelwert erhalten wird, Berechnen eines fünften Pixelwerts als eines Pixelwerts von jedem Pixel eines zusammengesetzten Bildes, in dem das Sichtbarlichtbild und das Nahinfrarotbild kombiniert sind;

Ausgeben eines Bildsignals, das ein Bild repräsentiert, in dem jedes Pixel den fünften Pixelwert aufweist;

Anwenden einer dritten Gewichtung (Wv) auf ein erstes Farbsignal (Cs), das eine Farbe jedes Pixels des Sichtbarlichtbildes repräsentiert, wenn der Signalprozessor (130; 200) bestimmt, dass der erste Pixelwert innerhalb des ersten Bereichs liegt, wobei die dritte Gewichtung größer ist als eine Gewichtung, die verwendet wird, wenn der Signalprozessor (130; 200) bestimmt, dass der erste Pixelwert nicht innerhalb des ersten Bereichs liegt; und

Ausgeben eines Bildsignals, das ein Bild repräsentiert, in dem der fünfte Pixelwert mit einer Farbe versehen ist, die durch ein zweites Farbsignal repräsentiert wird, das durch Anwenden der dritten Gewichtung (Wv) auf das erste Farbsignal (Cs) erhalten wurde.

2. Bildverarbeitungssystem nach Anspruch 1, wobei:

der Nahinfrarotbestrahler (120A) dazu ausgelegt ist, das Objekt mit Nahinfrarotstrahlen zu bestrahlen, die durch ein vorbestimmtes Modulationsverfahren moduliert sind; und

die zweite Bildaufnahmevorrichtung (120B) dazu ausgelegt ist, die Nahinfrarotstrahlen, die vom Objekt reflektiert werden, zu demodulieren und das Nahinfrarotbild aus demodulierten Nahinfrarotstrahlen zu erfassen.

3. Bildverarbeitungssystem nach Anspruch 1 oder 2, wobei der Signalprozessor (200) zu Folgendem ausgelegt ist:

Teilen des Sichtbarlichtbildes, das von der ersten Bildaufnahmevorrichtung (110) erfasst wurde, in Abschnitte, die einer vorbestimmten Anzahl von Raumfrequenzbändern entsprechen;

Teilen des Nahinfrarotbildes, das von der zweiten Bildaufnahmevorrichtung (120B) erfasst wurde, in Abschnitte, die der vorbestimmten Anzahl von Raumfrequenzbändern entsprechen;

Bestimmen mit Bezug auf jedes Pixel jedes der Abschnitte des Sichtbarlichtbildes, die den jeweiligen Frequenzbändern entsprechen, ob der erste Pixelwert innerhalb des ersten Bereichs vom ersten Untergrenzenschwellwert zum ersten Obergrenzenschwellwert liegt;

Anwenden der ersten Gewichtung (Wv) auf den ersten Pixelwert, wenn der Signalprozessor (200) bestimmt, dass der erste Pixelwert mit Bezug auf jedes Pixel jedes der Abschnitte des Sichtbarlichtbildes, die den jeweiligen Frequenzbändern entsprechen. innerhalb des ersten Bereichs liegt, wobei die erste Gewichtung (Wv) größer ist als eine Gewichtung (Wv), die verwendet wird, wenn der Signalprozessor (200) bestimmt, dass der erste Pixelwert nicht innerhalb des ersten Bereichs liegt;

Bestimmen mit Bezug auf jedes Pixel jedes der Abschnitte des Nahinfrarotbildes, die den jeweiligen Frequenzbändern entsprechen, ob der zweite Pixelwert innerhalb des zweiten Bereichs vom zweiten Untergrenzenschwellwert zum zweiten Obergrenzenschwellwert liegt;

Anwenden der zweiten Gewichtung (Wi) auf den zweiten Pixelwert, wenn der Signalprozessor (200) bestimmt, dass der zweite Pixelwert mit Bezug auf jedes Pixel jedes der Abschnitte des Nahinfrarotbildes, die den jeweiligen Frequenzbändern entsprechen, innerhalb des zweiten Bereichs liegt, wobei die zweite Gewichtung (Wi) größer ist als eine Gewichtung (Wi), die verwendet wird, wenn der Signalprozessor (200) bestimmt, dass der zweite Pixelwert nicht innerhalb des zweiten Bereichs liegt;

Berechnen eines Pixelwerts von jedem Pixel von jedem der Abschnitte des Sichtbarlichtbildes, die den jeweiligen Frequenzbändern entsprechen, auf Basis des dritten Pixelwerts, der durch Anwenden der ersten Gewichtung (Wv) auf den ersten Pixelwert erhalten wurde;

Berechnen eines Pixelwerts von jedem Pixel von jedem der Abschnitte des Nahinfrarotbildes, die den jeweiligen Frequenzbändern entsprechen, auf Basis des vierten Pixelwerts, der durch Anwenden der zweiten Gewichtung (Wv) auf den zweiten Pixelwert erhalten wurde; und

Erhalten des fünften Pixelwerts durch Kombinieren des Pixelwerts von jedem Pixel von jedem der Abschnitte des Sichtbarlichtbildes, die den jeweiligen Frequenzbändern entsprechen, wobei der Pixelwert jedes Pixels jedes der Abschnitte des Nahinfrarotbildes den jeweiligen Frequenzbändern entspricht.

4. Bildverarbeitungssystem nach Anspruch 3, wobei:

der Signalprozessor (200) dazu ausgelegt ist, die dritte Gewichtung (Wv) auf das erste Farbsignal (Cs), das eine Farbe von jedem Pixel des Sichtbarlichtbildes repräsentiert, anzuwenden, wenn der Signalprozessor (200) bestimmt, dass der erste Pixelwert mit Bezug auf jeden der Abschnitte des Sichtbarlichtbildes, die den jeweiligen Frequenzbändern entsprechen. innerhalb des ersten Bereichs liegt, wobei die dritte Gewichtung (Wv) größer ist als eine Gewichtung (Wv), die verwendet wird, wenn der erste Pixelwert nicht innerhalb des ersten Bereichs liegt; und

der Signalprozessor (200) dazu ausgelegt ist, jedes Pixel jedes der Abschnitte, die den jeweiligen Frequenzbändern entsprechen, mit einer Farbe zu versehen, die durch ein zweites Signal repräsentiert wird, das durch Anwenden der dritten Gewichtung (Wv) auf das erste Farbsignal (Cs) erhalten wurde.

**5.** Bildverarbeitungssystem nach Anspruch 3 oder 4, wobei der Signalprozessor (200) dazu ausgelegt ist, durch Kombinieren der Pixelwerte jedes Pixels, die den jeweiligen Frequenzbändern entsprechen, den fünften Pixelwert zu erhalten, nachdem ein Satz von vierten Gewichtungen (wf1 bis wfN) für jedes der Frequenzbänder auf einen entsprechenden der Pixelwerte angewendet wurde.

**6.** Bildverarbeitungssystem nach einem der Ansprüche 1 bis 5, wobei der Signalprozessor (130; 200) dazu ausgelegt ist, den fünften Pixelwert durch Teilen einer Summe des dritten Pixelwerts und des vierten Pixelwerts durch eine Summe der ersten Gewichtung (Wv) und der zweiten Gewichtung (Wi) zu erhalten.

## Revendications

**1.** Système de traitement d'image comprenant :

un premier dispositif de prise d'image (110) conçu pour capturer une image de lumière visible obtenue à partir d'une première lumière réfléchie qui est réfléchie par un objet irradié par une lumière visible ;
un dispositif d'irradiation proche infrarouge (120A) conçu pour irradier l'objet avec des rayons proches infrarouges ;
un deuxième dispositif de prise d'image (120B) conçu pour capturer une image proche infrarouge obtenue à partir des rayons proches infrarouges réfléchis par l'objet ; et
un processeur de signal (130 ; 200) conçu pour :

déterminer si une première valeur de pixel en tant que valeur de pixel de chaque pixel de l'image de lumière visible se situe dans une première plage allant d'une première valeur seuil de limite inférieure à une première valeur seuil de limite supérieure, une luminance d'un pixel étant représentée par un signal de luminance (Yv) qui est équivalent à la première valeur de pixel ;
appliquer un premier poids (Wv) à la première valeur de pixel lorsque le processeur de signal (130 ; 200) détermine que la première valeur de pixel se situe dans la première plage, le premier poids (Wv) étant supérieur à un poids (Wv) utilisé lorsque le processeur de signal (130 ; 200) détermine que la première valeur de pixel ne se situe pas dans la première plage ;
déterminer si une deuxième valeur de pixel en tant que valeur de pixel de chaque pixel de l'image proche infrarouge se situe dans une deuxième plage allant d'une deuxième valeur seuil de limite inférieure à une deuxième valeur seuil de limite supérieure ;
appliquer un deuxième poids (Wi) à la deuxième valeur de pixel lorsque le processeur de signal (130 ; 200) détermine que la deuxième valeur de pixel se situe dans la deuxième plage, le deuxième poids étant supérieur à un poids (Wi) utilisé lorsque le processeur de signal (130 ; 200) détermine que la deuxième valeur de pixel ne se situe pas dans la deuxième plage ;
calculer une cinquième valeur de pixel en tant que valeur de pixel de chaque pixel d'une image composite dans laquelle l'image de lumière visible et l'image proche infrarouge sont combinées, en fonction d'une troisième valeur de pixel obtenue par l'application du premier poids (Wv) à la première valeur de pixel, et une quatrième valeur de pixel obtenue par l'application du deuxième poids (Wi) à la deuxième valeur de pixel ;
émettre un signal d'image représentant une image dans laquelle chaque pixel présente ladite cinquième valeur de pixel ;
appliquer un troisième poids (Wv) à un premier signal de couleur (Cs) représentant une couleur de chaque pixel de l'image de lumière visible lorsque le processeur de signal (130 ; 200) détermine que la première valeur de pixel se situe dans la première plage, le troisième poids étant supérieur à un poids utilisé lorsque le processeur de signal (130 ; 200) détermine que la première valeur de pixel ne se situe pas dans la première plage ; et
émettre un signal d'image représentant une image dans laquelle la cinquième valeur de pixel est dotée d'une couleur représentée par un deuxième signal de couleur obtenu par l'application du troisième poids (Wv) au premier signal de couleur (Cs).

**2.** Système de traitement d'image selon la revendication 1, dans lequel :

le dispositif d'irradiation proche infrarouge (120A) est conçu pour irradier l'objet avec des rayons proches infrarouges qui sont modulés par un procédé de modulation prédéterminé ; et

le deuxième dispositif de prise d'image (120B) est conçu pour démoduler les rayons proches infrarouges réfléchis par l'objet, et capturer l'image proche infrarouge à partir de rayons proches infrarouges démodulés.

**3.** Système de traitement d'image selon la revendication 1 ou 2, dans lequel le processeur de signal (200) est conçu pour :

diviser l'image de lumière visible capturée par le premier dispositif de prise d'image (110) en sections correspondant à un nombre prédéterminé de bandes de fréquences spatiales ;

diviser l'image proche infrarouge capturée par le deuxième dispositif de prise d'image (120B) en sections correspondant au nombre prédéterminé de bandes de fréquences spatiales ;

déterminer si la première valeur de pixel se situe dans la première plage allant de la première valeur seuil de limite inférieure à la première valeur seuil de limite supérieure, par rapport à chaque pixel de chacune des sections de l'image de lumière visible correspondant aux bandes de fréquences respectives ;

appliquer le premier poids (Wv) à la première valeur de pixel lorsque le processeur de signal (200) détermine que la première valeur de pixel se situe dans la première plage, par rapport à chaque pixel de chacune des sections de l'image de lumière visible correspondant aux bandes de fréquences respectives, le premier poids (Wv) étant supérieur à un poids (Wv) utilisé lorsque le processeur de signal (200) détermine que la première valeur de pixel ne se situe pas dans la première plage ;

déterminer si la deuxième valeur de pixel se situe dans la deuxième plage allant de la deuxième valeur seuil de limite inférieure à la deuxième valeur seuil de limite supérieure, par rapport à chaque pixel de chacune des sections de l'image proche infrarouge correspondant aux bandes de fréquences respectives ;

appliquer le deuxième poids (Wi) à la deuxième valeur de pixel lorsque le processeur de signal (200) détermine que la deuxième valeur de pixel se situe dans la deuxième plage, par rapport à chaque pixel de chacune des sections de l'image proche infrarouge correspondant aux bandes de fréquence respectives, le deuxième poids (Wi) étant supérieur à un poids (Wi) utilisé lorsque le processeur de signal (200) détermine que la deuxième valeur de pixel ne se situe pas dans la deuxième plage ;

calculer une valeur de pixel de chacun desdits pixels de chacune des sections de l'image de lumière visible correspondant aux bandes de fréquences respectives, en fonction de la troisième valeur de pixel obtenue par l'application du premier poids (Wv) à la première valeur de pixel ;

calculer une valeur de pixel de chacun desdits pixels de chacune des sections de l'image proche infrarouge correspondant aux bandes de fréquences respectives, en fonction de la quatrième valeur de pixel obtenue par l'application du deuxième poids à la deuxième valeur de pixel ; et

obtenir la cinquième valeur de pixel par la combinaison de la valeur de pixel de chacun desdits pixels de chacune des sections de l'image de lumière visible correspondant aux bandes de fréquences respectives, avec la valeur de pixel de chacun desdits pixels de chacune des sections de l'image proche infrarouge correspondant aux bandes de fréquences respectives.

**4.** Système de traitement d'image selon la revendication 3, dans lequel :

le processeur de signal (200) est conçu pour appliquer le troisième poids (Wv) au premier signal de couleur (Cs) représentant une couleur de chaque pixel de l'image de lumière visible lorsque le processeur de signal (200) détermine que la première valeur de pixel se situe dans la première plage, par rapport à chacune des sections de l'image de lumière visible correspondant aux bandes de fréquences respectives, le troisième poids (Wv) étant supérieur à un poids (Wv) utilisé lorsque la première valeur de pixel ne se situe pas dans la première plage ; et

le processeur de signal (200) est conçu pour doter chacun desdits pixels de chacune des sections correspondant aux bandes de fréquences respectives, d'une couleur représentée par un deuxième signal obtenu par l'application du troisième poids (Wv) au premier signal de couleur (Cs).

**5.** Système de traitement d'image selon la revendication 3 ou 4, dans lequel le processeur de signal (200) est conçu pour obtenir la cinquième valeur de pixel, par la combinaison des valeurs de pixel de chacun desdits pixels correspondant aux bandes de fréquences respectives, après l'application d'un quatrième poids (wf1 à wfN) défini pour chacune des bandes de fréquences, à une valeur correspondante des valeurs de pixel.

**6.** Système de traitement d'image selon l'une quelconque des revendications 1 à 5, dans lequel le processeur de signal (130 ; 200) est conçu pour obtenir la cinquième valeur de pixel, par la division d'une somme de la troisième valeur de pixel et de la quatrième valeur de pixel, par une somme du premier poids (Wv) et du deuxième poids (Wi).

# FIG. 1

# FIG. 2

**(1) VISIBLE-LIGHT IMAGE (Yv)**

**EFFECTIVENESS DETERMINING UNIT** — 133

$Yv \geq Imax$    $Wv=0$
$Yv = Imin$    $Wv=0$
    $Wv=1$

**PIXEL VALUE CALCULATING UNIT** — 136

$$Y=(Yv \times Wv + Yi \times Wi)/(Wv+Wi)$$

**(2) NEAR-INFRARED IMAGE (Yi)**

**EFFECTIVENESS DETERMINING UNIT** — 131

$Yi \geq Imax$    $Wi=0$
$Yi = Imin$    $Wi=0$
    $Wi=1$

FIG. 3

EP 3 288 255 B1

# FIG. 4

START

S1B1
RADIATE SYNCHRONOUS LIGHT

S1B2
CAPTURE REFLECTED IMAGE

S1A
CAPTURE VISIBLE-LIGHT IMAGE

SIGNAL MIXING

S2B
DIVIDE IMAGE BY SPATIAL FREQUENCY

S2A
DIVIDE IMAGE BY SPATIAL FREQUENCY

S3B
$k=1$

S3A
$k=1$

SPATIAL FREQUENCY BAND k

S4B
$ThiL \leqq Yik \leqq ThiH?$    NO

S4A
$ThvL \leqq Yvk \leqq ThvH?$    NO

YES

S5B1
$Wik=WikH$

S5B2
$Wik=WikL$

YES

S5A1
$Wvk=WvkH$

S5A2
$Wvk=WvkL$

S6B
WEIGHT LUMINANCE SIGNAL
$Yikw=Yik \times Wik$

S6A
WEIGHT LUMINANCE SIGNAL
$Yvkw=Yvk \times Wvk$

S7B
MIX LUMINANCE VALUES
$Ykw=Yikw+Yvkw$

S7A
WEIGHT COLOR SIGNAL
$Cskw=Csk \times Wvk$

S8B
WEIGHT LUMINANCE SIGNAL FOR FREQUENCY k
$Ykww=Ykw \times Wfk$

S8A
WEIGHT COLOR SIGNAL FOR FREQUENCY k
$Cskww=Cskw \times Wfk$

S9B
ADD UP LUMINANCE VALUES
$Y=Y+Ykww$

S9A
ADD UP COLOR VALUES
$Cs=Cs+Cskww$

S10B
NO    $k=N?$

S11B
$k=k+1$    YES

S10A
$k=N?$    NO

S11A
$k=k+1$

YES

S12
DISPLAY IMAGE

END

**EP 3 288 255 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012067028 A
- WO 2012067028 A1
- US 2005040333 A
- US 2003184827 A
- US 2009268963 A